# EUROPEAN PATENT APPLICATION

(11) **EP 1 761 014 A1**
(43) Date of publication of application: **07.03.2007**
(21) Application number: 05076988.4
(22) Date of filing: 30.08.2005
(51) Int. Cl.: H04M 3/42, H04Q 7/20, H04L 12/56

(54) **Remote access to features of a PBX by GPRS signalling**

(71) Applicant: Nederlandse Organisatie voor toegepast-natuurwetenschappelijk Onderzoek TNO, 2628 VK Delft (NL)
(72) Inventor: Stokking, Hans Maarten, 2545 HK Den Haag (NL); Klos, Victor Bastiaan, 2498 BV Den Haag (NL)
(74) Representative: Winckels, Johannes Hubertus F.

(57) **Abstract**

The application relates to the problem that a PBX cannot exchange signalling messages with terminals through a public mobile network, by which the PBX could not execute advanced services for such, through the public mobile network connected, terminals. The problem is solved by the exchange of those signalling messages through the Internet. In particular the problem is solved by a telephone system, comprising a PBX (1) and for telephony appropriated terminals (2), where the PBX and the terminals comprise means for the exchange of signalling messages through a wireless business network (3) for the purpose of the establishment of voice connections (7) through the business network and the realization of advanced services by means of the PBX. Furthermore, the PBX and the terminals comprise means for the exchange, through a public data network (8), as the Internet, of signalling messages for the purpose of the establishment of voice connections (7) through a public telephone (4,5) system and the realization of advanced services by means of the PBX.

## Description

### Field

The invention concerns a telephone system, comprising a private or business exchange, hereinafter (also) called PBX, and terminals suitable for telephony, in which the PBX and the terminals comprise means for maintening, via a wireless business network a signalling connection for the purpose of, among others, setting up voice connections through the business network.

### Background

Voice over IP begins to be more and more mainstream. More and more companies apply VoIP, mainly to get the costs of telephony reduced. Combination (dual mode) terminals and systems arranged for that are known as such e.g. from W02004004187 and US20040087307, being fit to function as a GSM terminal and for communication through a wireless business network (VoIP through WLAN, abbr. VoWLAN).

Reasons to integrate GSM and VoWLAN can be:
- Use of GSM is in practice still expensive. The tariffs are indeed decreasing, but the total of the costs remains high.
- GSM offers in practice a still limited functionality. A simple option like redirecting a call is not available.
- More and more companies have built a WLAN network on site. This is mainly to provide laptop user in-house mobility.
- Telephoning on site becomes cheaper, because use can be made of the in-house WLAN network. The call charges of this are nil.

A private telephony network (PBX in a business environment) offers far more functionality than a public network because (1) all voice channels go through the PBX, and (2) each terminal has a signalling connection with that same PBX. Due to this, the PBX is able to, e.g.:
- Play messages, go through entire menu structures
- Connect several users with one another
- Connect an external conversation from one to another telephone.
- Have calls to wait

The above mentioned shows that a need exists to enable terminals outside the reach of the business environment, still to be connected with the same PBX,. The following problems may occur:
(1) There is no signalling possible between the mobile terminal and the PBX (the signalling connections within the public network serve merely for signalling within that public network, but are not externally accessible, in this case by respectively the PBX and the terminal);
(2) Voice connections do not run, as a standard, via the PBX.

If the public network is a non-wireless network, the problems may be solved in two ways. The first way is by means of a leased line between the terminal and the PBX. The second way is by means of a special interface module on the side of the terminal and a special interface module on the side of the PBX, which modules have to provide that a connection is set up between the terminal and the business environment at the moment it is needed. For the terminal and the PBX it looks like there is a leased line, but it will make a considerable difference in the costs. The interface module detects activities at the PBX or at the telephone and, if required, sets up the connection.

If the public network is a wireless network, however, the problems can not be solved in the same way as with non-wireless networks: a leased line via the GSM network to a terminal is not possible, neither the use of interface modules which can detect activities at the PBX or at the telephone and can set up a connection.

### Summary

The present invention aims to resolve the problem mentioned in the last paragraph of the previous section, by - in short - using a public data network, like the Internet, and the (programming) possibilities offered by modern mobile terminals, namely by letting the signalling between the terminal - outside the reach of the WLAN - and the PBX run via the public data network - which is accessible both by the terminal and by the PBX. The voice connection between the terminals concerned continues, in this way, to go through the public mobile (GSM) network (for which that mobile network just uses its own internal signalling system).

According to the invention, in a telephony system as described up here, the PBX and the terminals comprise means to exchange signalling messages (codes, signals) with one another through a public data network. All this with the aim to facilitate to terminals outside the actiradius of the WLAN, that (have to) make use of the public (viz. mobile) telephony network, additional to voice connections, advanced services (normally only possible inside the PBX/WLAN environment) too.

The invention aims also to provide a PBX and/or a terminal arranged to let the signalling, necessary for the implementation of advanced services, between the terminal and the PBX go through the public data network when the terminal is outside the reach of the WLAN.

Below, various aspects will be explained more detailed by means of an elaborated exemplary embodiment.

### Exemplary embodiment

Figure 1 schematically shows an architecture of the new configuration.
Figure 2 schematically shows the architecture from figure 1.
Figures 3 and 4 illustrate the exchange of signalling messages.

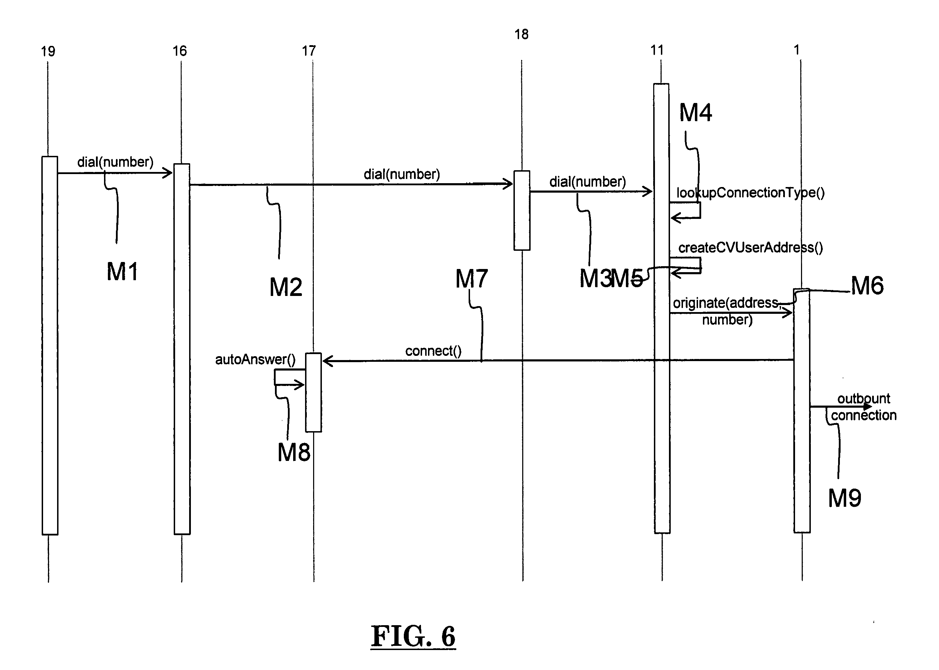

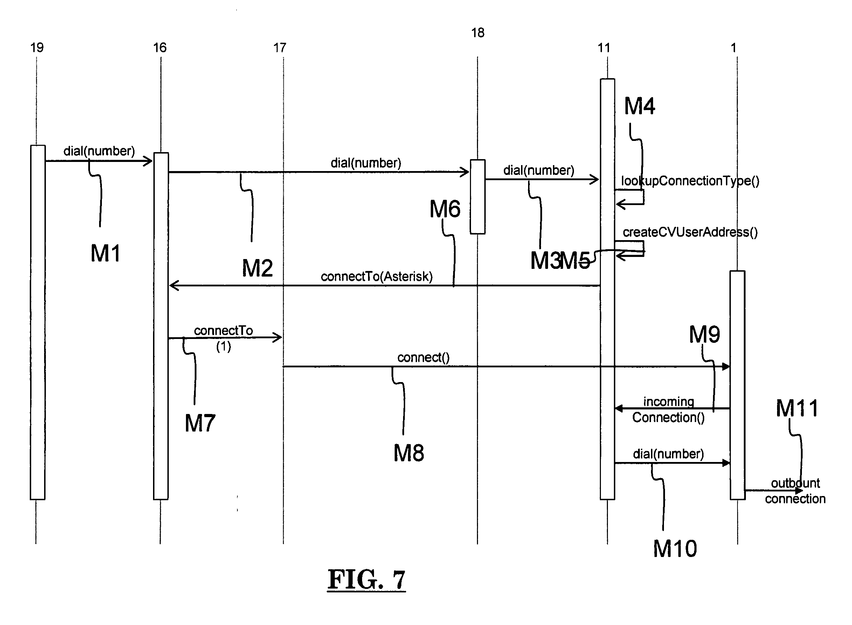

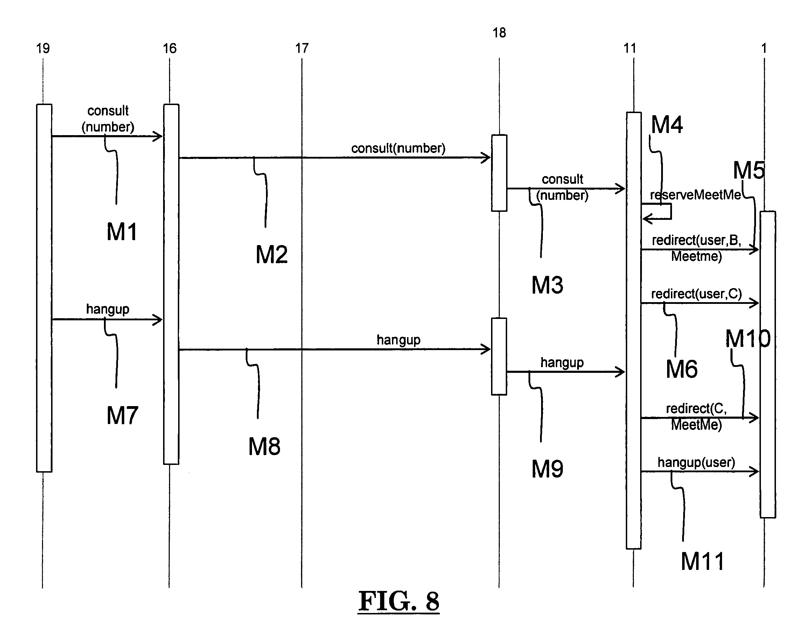

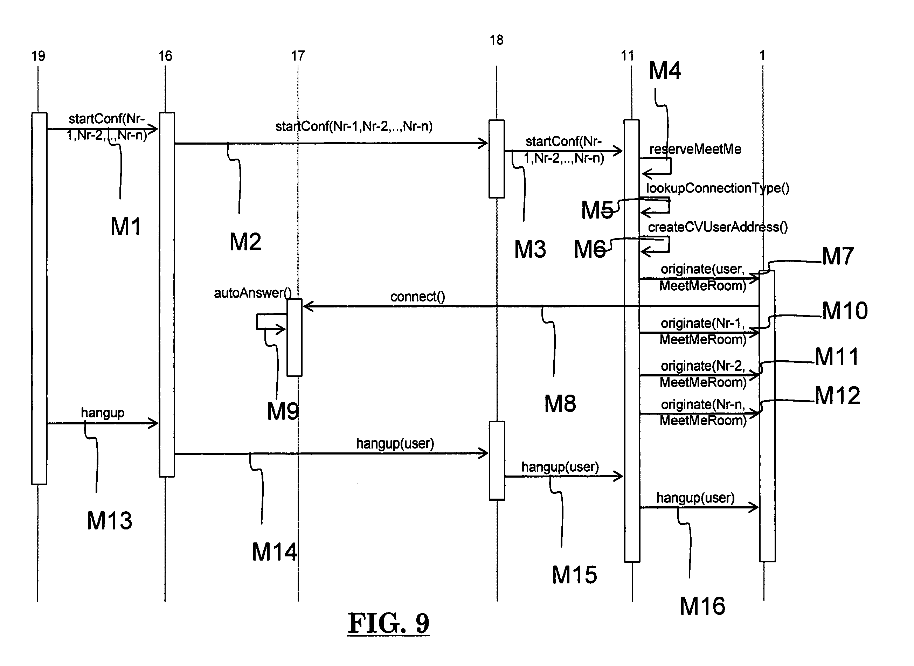

Figures 5 to 9 inclusive illustrate the exchange of signalling messages more in detail, for various advanced services.

Below, 'inside the company' means that the user terminal has connection through the WLAN; 'outside the company' means that the terminal has connection through the public GSM/GPRS network. The following scenarios for a dialogue are being discussed:
1. User is inside the company and is being called.
2. User is outside the company and is being called.
3. User is inside the company and is calling his own.
4. User is outside the company and is calling his own.

During the conversation, the following can also happen:
5. User moves from within the company to outside the company.
6. User moves from outside the company to within the company.

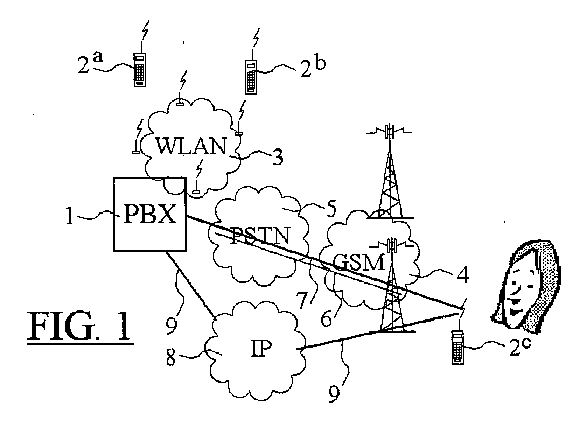

Before discussion of the scenarios, first the idea of the invention is discussed by means of figure 1. Figure 1 shows a telephony system, comprising a PBX 1 and various terminals 2 (a, b, c), appropriate for VoIP through WLAN 3. As long as the terminals 2 (in this case 2a and 2b) are within the reach of the WLAN 3, the signalling connection with each terminal is maintained in a standard way, whereby these terminals can set up voice connections with one another and can make use of other facilities of the PBX 1. As soon as a terminal (in this case terminal 2c) is outside the reach of the WLAN 3, a voice connection can be set up between the PBX 1 and the terminal 2c, through the public network 5 (PSTN) and 6 (GSM) which has a larger geographical reach (but is more expensive on the other hand). For the implementation and the maintenance of a voice connection 6 between terminal 2c and the PBX 1, use is made, in the normal way, of (a system of) signalling connections 7 withing respectively the networks 5 and 6. 6. The signalling connections 7 are, however, not accesible or manipulable through the terminal 2c and the PBX 1, so that the terminal 2c and the PBX 1 can not exchange signalling signals mutually, as this, however, is possible when the terminal 2c (just like the other terminals, 2a and 2b) is within the reach of the WLAN 3. Therefore, terminal 2c - contrary to terminals 2a and 2b - can indeed communicate with the other terminals 2 through the PBX, however, can not make use of other, more advanced services of the PBX, as the other terminals 2 - as long as they remain within the scope of action of the WLAN - do. However, the present invention provides that terminal 2c and PBX 1, as within the scope of action of the WLAN, are able to exchange signalling signals with one another, namely through the public network 8 (in this case the on TCP/IP based Internet). It is of course a condition that both the terminal 2c and the PBX 1 are to be equipped with interfaces which are appropriate or adapted for that purpose. The current modern terminals and PBX's, however, do provide for that possibility and also for the implementation of appropriate (for example 'third party') software applications that can make use of the Internet.

By means of signalling - either within the WLAN, or outside it, but then through the Internet 8 - information can be exchanged like:
- Signalling messages from the terminal to the PBX, e.g.:
   o Redirect this call to a colleague
   o Add the incoming call to the current one
   o Set up a connection to this number
   o Ignore this number, henceforward always directly to the voicemail
- Signalling messages from the PBX to the terminal, e.g.:
   o There is an incoming call for you from this number
   o There is voicemail for you
   o Please set up a call to me

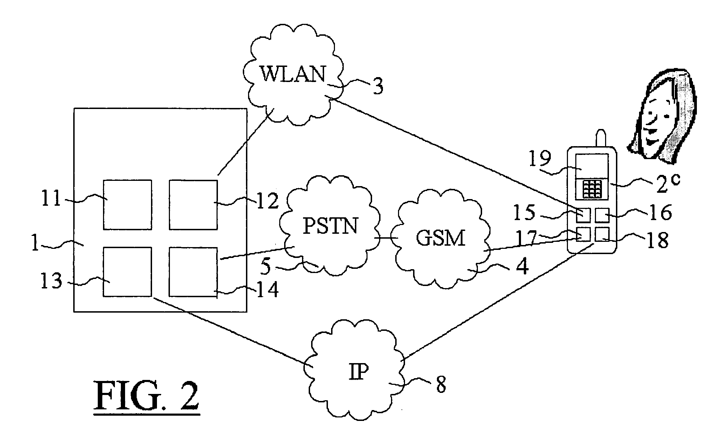

In order to realize this, both, the PBX 1 and the terminal 2, need an appropriate signalling application for transmitting and processing of such signalling messages. Both applications can thus control the voice connections through the WLAN 3 or the public voice network 4/5, as is explained in more detail at the discussion of figure 2.

A conversation between two terminals 2 comprises two parts, in which the PBX 1 forms the centre. Each user can set up a voice connection to the PBX 1 from his own terminal, below named as a 'call leg'. The PBX then connects two call legs (each between the terminal and the PBX) with one another, so that the users can talk to one another.

In order to control a conversation, the signalling (through the IP network 8) and the voice connection (for example through the GSM network 4), and that are linked one another, need to matched. The interface applications at the terminal 2c and the PBX 1 have to know from one another which voice connection is concerned. As, for example, a GSM connection is established from the terminal to the PBX, the PBX has to know from which terminal that connection originates. The providing for the relation between signalling and voice connection is called 'binding'. This binding is thus essentially an explicit reference from the signalling to the voice connection. Information that can be used for that purpose is for example:
- Moment of entry of call
- Calling number display / which number does the connection come from
- Incoming call / at which number enters the connections
- Extra information in the signalling (extra numbers)

Problem of the present concept is that it uses the current offers of telecommunication from the telecom operators. An operator itself has many possibilities for signalling exchange; however, within respectively a PBX or network one depends on what the operator offers. Calling number identification for example is not always available, for example for international calls and calls between different operators.

The number at which a call enters at the PBX seems to be a good choice. This is always available and is within the span of control of the company. The PBX can communicate to the terminal to which number a call leg has to be established. The PBX can first reserve this number for a call, then hand it out to a terminal and after use put it back in a pool of numbers to be used (transactional model, avoiding of double use).

One of the main reasons of the current concept is that it becomes possible to handle each conversation as cheap as possible (with preservation of advanced functionalities). The cost advantage is reached for a large part by the use of WLAN. Through WLAN colleagues can call one another without extra call charges.

Moreover, the tariffs for fixed telephony are usually lower than calls from a GSM mobile: in the present concept, an outgoing call is preferably - if possible - realized through the fixed (cheaper) public network rather then through the mobile (more expensive) network.

By means of figure 2, the functioning will be explained in more detail. Figure 2 shows that the PBX 1 and the terminal 2c (as well as the other terminals) are equipped with hardware or software modules which are appropriate for communication through the WLAN 3, the public PSTN/GSM network 4/5 and, as an extra, for the exchange of signalling messages (based on the GPRS or WLAN protocol) through the public IP network 8.
- The PBX 1 is for example an 'Asterisk' open source PBX with VoIP possibilities (www.asterisk.org). This PBX has possibilities for connections to other softwares, the so-called AGI interface and the Manager API interface.
- The terminal 2 (in this case 2c) is for example a smart phone with Windows Mobile edition, like the Samsun SCH-i730. Characteristic of that terminal is that it can be programmed (it comprises a general OS like Windows, Linux or Symbian) and that independent parties can develop software for it.
- The PBX and the terminal comprise special software modules (SSM), namely the modules 11 (PBX) and 16 (terminal 2c). Furthermore, standard modules, appropriate for communication with the WLAN (modules 12 and 15), for communication with the public telephone network 4/5 (modules 14 and 17) and interface modules for the Internet (modules 13 and 18).

For the voice connections, use is made of standard telephone solutions, like GSM and VoIP. These are known techniques with known standards. Special signalling will have to go over the IP connection. Possibly this can be implemented by making use of a standard like SIP (session initiation protocol), but more generally this is a software - software interface. For this purpose, a technique like XML or SOAP can be used, which are equally well generally known techniques.

Scenario A: The mobile phone is called and a connection is established
1. In all cases, a call enters at the PBX.
2. At an incoming call, the PBX communicates to the special PBX software module 11 that a call has entered for the user.
3. The PBX software module communicates through the IP connection - through the IP network 8 - to the special telephone software (in module 16) that there is a call for the user.
4. The telephone software module 16 shows to the user, by means of a user interface, that there is a call for the user.
5. At this moment, the user makes a choice: what shall I do with the call? In this example, the users makes the choice 'reply'. Alternatives are e.g. 'refuse', 'to voicemail', 'redirect to colleague', etc.
6. The telephone software module 16 communicates - through the IP network - to the PBX software module 11 that the call should be forwarded to the telephone.
7. The PBX software module 11 communicates to the PBX that the call should be forwarded to the telephone.
8. The PBX establishes a voice connection to the telephone, in this case - as terminal 2c is outside the reach of the WLAN - through the GSM network 4/5.
9. The telephone communicates to the special software module 16 that a call enters.
10. The special telephone software module 16 picks up the telephone for the user (the software namely knows from step 5 what is the user's desired action).
11. The call has been established.

Alternatives are:
- In step 6, the telephone software 16 can choose to establish a voice connection itself to the PBX. Alternatively, the PBX could have indicated this in step 3.
- In step 8, the telephone can already be in position 'auto-answer', by means of which the conversation is being established automatically. Step 9 and 10 then are not necessary.

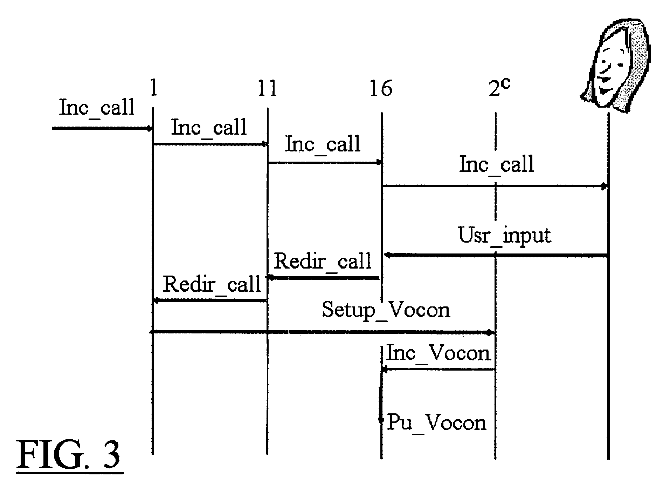

In the flow chart of figure 3, these things are reflected graphically. In this, the same position numbers for the system parts have been used as in the figures 1 and 2. Furthermore, the following abbreviations have been used:

| | |
|---|---|
| Inc_call | Incoming telephone call |
| Usr_input | Decision by the user |
| Redir_call | Redirect telephone call |
| Setup_Vocon | Establish voice connection |
| Inc_Vocon | Incoming voice connection |
| Pu_Vocon | Pick up voice connection |

In order to be able to do all this, information is needed. In step 1, the calling party has in many cases a number (cf: calling number display, calling line identification). This number is being communicated in step 2, 3, and 4, in order to offer calling number display to the user.

If then the user has the telephone call redirected, an address/telephone number is needed in step 8 to establish the voice connection to the telephone. In the case of use of the GSM network, this is a GSM number (in The Netherlands: 06-xxxxxxxx). The special PBX software 11 has to recognize this. Ideally, there is a database in which users and their telephone numbers are given. The special PBX software can access the database in order to search for these numbers.

Please note: the user thus has another number for his contactability, e.g. a fixed number (for TNO ICT: 0031 15 - 2857xxx). 015 - 2857xxx). The calling party has chosen this number, which first joins the PBX. The special software gets the 0031 15 number and, on this basis, it can decide which user belongs to the chosen number. Also here, information is required (which number belongs to which user), which will be in the database.

Scenario B: The user calls and a connection is established
1. The user wants to make a call, and chooses an address / number, making use of the user interface of the special telephone software 16.
2. The telephone software module 16 informs the PBX software module 11 (through the IP network 8) that the user wants to make a call and passes on the address / number to be called.
3. The PBX software 11 passes on a telephone number to the telephone software 16 and asks the telephone software to establish a voice connection to that number.
4. The telephone software 16 informs the telephone to establish a call to the number indicated by the PBX software 11.
5. The telephone establishes the call to the PBX, to the indicated number.
6. The PBX reports to the special PBX software 11 that a call has entered at the indicated number.
7. The PBX software recognizes that it is the voice connection of the telephone (on the basis of the indicated number) and informs the PBX to redirect the call to the by the user chosen number.
8. The PBX redirects the call to the by the user chosen number.

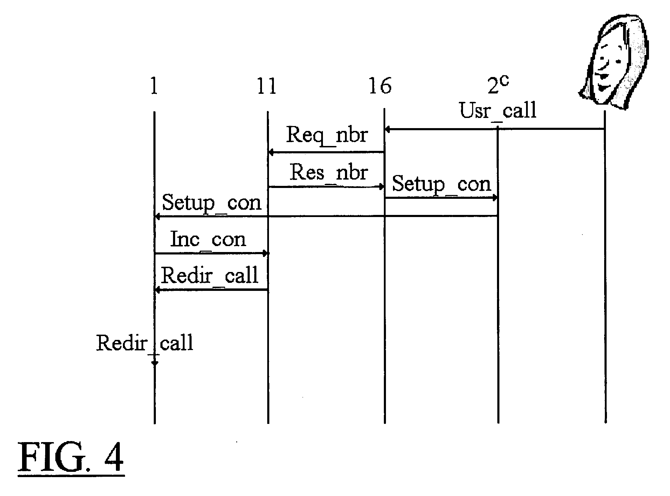

In the flow chart of figure 4, these things are reflected graphically. In this, the same position numbers have been used as in the figures 1 and 2. Furthermore, the next abbreviations have been used:

| | |
|---|---|
| Usr_call | User chooses a number |
| Req_nbr | Establishment of call, request for dial-up number |
| Res_nbr | Reserved dial-up number |
| Setup_con | Establish voice connection to reserved number |
| Inc_con | Report incoming voice connection |
| Redir_call | Redirect call to chosen number |

Remark: the matching between the signalling and the voice connection happens in this example on the basis of a telephone number at the PBX. This is being reserved for a telephone terminal and can be released as soon as the voice connection is no longer needed.

### Alternatives:

- In step 3, the PBX software can also decide to establish itself the phone call to the telephone. The remaining steps will then go comparable to scenario A.
- Instead of making the connection (= establishing the relation between signalling and voice connection) on the basis of an incoming number at the PBX, this can also happen on the basis of other (unique) information, e.g.: chosen number, moment of call, calling party (calling number display). Incoming number at the PBX seems to the best choice.
- normally, a PBX replies the phone already in step 5, before redirecting the call in step 8. This, however, can be done in a different way. The PBX can keep the call in the status 'ringing' (compare: let the call ring). In this way, there are not yet call charges for the calling party. Only when the other party replies, the PBX has to realize the voice connection to the calling party (by replying to the incoming call).

Furthermore, there is talk about information flows. The user chooses a number This is saved temporarily by the PBX software. The PBX software then reserves a number which joing the PBX (for us example between the series 0031 15 2857501 - 0031 15 2857530). The PBX has to temporarily save this, in order to later make a connection with the incoming call.

The PBX also has to know the 0031 15 number of the user, in order to ensure that, at the outgoing call, this 0031 15 number is visible for calling number display.

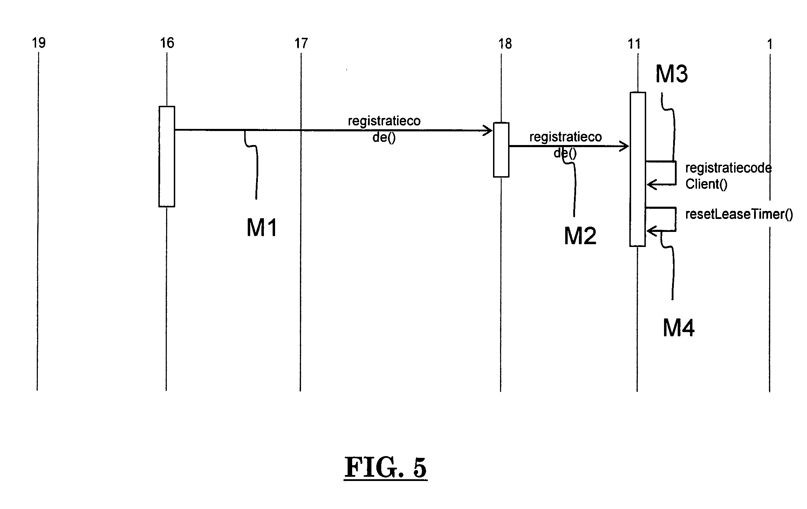

Finally, a more detailed protocol will be dealt with below, by means of the figures 5 up to and including 9.

### Figure 5:

In order to ensure that the systems works, the client (module 16) and the server (module 11) have to be in mutual contact. Here, a so-called lease-registration code mechanism has been chosen. The client reports here to the server by means of a registration code message (M1), which is sent by the module 18 to the module 11. There is a timeout on this registration code, in order to ensure that the client who does not sign out correctly (e.g. taking out the battery from the device without closing normally) is anyhow removed from the registration. The module 11 keeps its own registration (M3), and will, when the lease after a certain period expires, remove the client from the registration. Whenever a client reports by means of a registration code (M1), the time to expire will be set back to the timeout value.

### Figure 6:

If the user, through the user interface (module 19), lets it be known that he wants to start a call, the module 19 sends a message, through the module 16 (M1) and the module 18 (M2), to the intelligence of the server (module 11) (M3). The server first finds out in which network the user is situated (M4). This can be deduced for example from the information of the registration, e.g. the IP address by which the user has signed in. Then, the module 11 searches for the matching telephone number (M5). In this case, the server establishes the call, and the PBX 1 orders (namely its - in the figures not explicitly indicated standard - operating system) to establish a call between the user and the number to be called (M6). The PBX 1 first establishes the call to the user (M7), which joins the module 17 of the client. In this example, this one is set up to reply automatically, so that the user (who is joined through the module 19) does not notice anything of this. Then, the PBX 1 dials out to the chosen number (M9).

### Figure 7:

In this example, the user dials, but the client establishes the call. The steps up to and including M5 are analogous to the aforementioned example. In step M6, the device is requested to establish a voice connection to, in this case, the PBX 1 (M6). The user himself does not notice anything of this, since this is being dealt with by the device by means of the module 16. The module 16 gives the instruction to the module 17 to establish the voice connection (M7), after which the module 17 actively establishes the voice connection (M8). The PBX 1 sees the call entering, and delegates its settlements to the module 11 (M9), which decides to where the call has to be established (M10). Finally, the PBX 1 directs the call to the chosen number (M11).

### Figure 8:

This example starts with a conversation in progress of M2 persons, called user and person B. The user of terminal 2c wants to redirect person B to person C, but only after consultation with person C. The user indicates, by means of the module 19, that he wants so, and module 19 directs this to the module 16 (M1). The client redirects this through the module 18 (M2) to the module 11 (M3). The module 11 temporarily puts on hold user B. In this case, this happens by means of a so-called MeetMe room, which is being reserved (M4). The MeetMe is an Asterisk specific functionality, and putting on hold can be arranged for in another way in other PBX'. The module 11 first puts on hold both persons into the waiting room (M5) and then redirects the user to person C (M6). After this, the user and person C can have a conversation. If then the user hangs up (M7), and this is being reported to the module 11 (M8 & M9), the PBX 1 connects the persons B and C to one another (M10) and disconnects the connection from the user (M11).

### Figure 9:

The user has, in this case, selected a number of persons in the module 19, in order to have a conference call / group conversation (Nr-1, Nr-2 up to and including Nr-n). The module 19 reports this to the module 16, which directs this through the module 18 (M2) to the module 11 (M3). The module 11 reserves a location for the group conversation (M4), and then searches for the number of the user, analogous to the aforementioned example (M5 & M6). Then, the module 11 orders the PBX 1 to put the user into the reserved conference room (M7), after which the PBX 1 establishes the connection to the client (M8) and which is being accepted by the client (M9). After this, the module 11 orders the PBX 1 to also invite the other users to the group conversation (M10, M11 & M12). If the user indicates, through the module 19, to want to finish his participation to the group conversation (M13), this is being directed to the PBX 1 (M16) through the module 16 (M14) and the module 18 (M15) and the module 11. This one can then take the user out of the group conversation, after which the other participants can continue their conversation.

## Claims

**1.** Telephone system, comprising a PBX (1) and at least one terminal (2) appropriate for telephony, wherein the PBX and the terminal comprise means for the exchange of signalling messages through a wireless business network (3) for the purpose of the establishment of voice connections (7) through the business network and the realization of advanced services by means of the PBX, wherein, furthermore, the PBX and the terminal comprise means for the exchange of signalling messages through a public data network (8) for the purpose of the establishment of voice connections (7) through the public telephone network (4, 5) and the realization of advanced services by means of the PBX.

**2.** Telephony system according to claim 1, where the public data network is a public IP based network, as the Internet.

**3.** Telephony system according to claim 1, where the signalling messages comprise GPRS based signals or codes.

**3.** PBX (1), comprising means for the exchange of signalling messages through a wireless business network (3) with terminals (2) which are appropriate for telephony, for the purpose of the establishment of voice connections (7) through the business network and the realization of advanced services by means of the PBX, wherein, furthermore, the PBX comprises means for the exchange of signalling messages through a public data network (8) for the purpose of the establishment of voice connections (7) with such terminals through the public telephone network (4, 5) and the realization of advanced services by means of the PBX.

**4.** Terminal (2), comprising means for the exchange of signalling messages through a wireless business network (3) with a PBX (1), for the purpose of the establishment of voice connections (7) through the business network and the realization of advanced services by means of that PBX, where, furthermore, the terminal comprises means for the exchange of signalling messages through a public data network (8) for the purpose of the establishment of voice connections (7) with the PBX through the public telephone network (4, 5) and the realization of advanced services by means of that PBX.
